Europäisches Patentamt

European Patent Office

Office européen des brevets

(19)

(11) Veröffentlichungsnummer : **0 333 719 B1**

## (12) EUROPÄISCHE PATENTSCHRIFT

(45) Veröffentlichungstag der Patentschrift :
29.05.91 Patentblatt 91/22

(51) Int. Cl.⁵ : **E21D 20/02,** C08L 63/10, C08L 67/06

(21) Anmeldenummer : **87906913.6**

(22) Anmeldetag : **29.10.87**

(86) Internationale Anmeldenummer :
PCT/DE87/00487

(87) Internationale Veröffentlichungsnummer :
WO 88/03599 19.05.88 Gazette 88/11

(54) REAKTIONSSATZ UND MEHRKAMMERPATRONE UND VERFAHREN ZUR KLEBVERANKERUNG VON BEFESTIGUNGSELEMENTEN IN BEFESTIGUNGSGRUND.

(30) Priorität : 13.11.86 DE 3638750

(43) Veröffentlichungstag der Anmeldung :
27.09.89 Patentblatt 89/39

(45) Bekanntmachung des Hinweises auf die
Patenterteilung :
29.05.91 Patentblatt 91/22

(84) Benannte Vertragsstaaten :
AT BE CH DE FR GB IT LI NL SE

(56) Entgegenhaltungen :
EP-A- 0 150 555
DE-A- 1 205 038
US-A- 3 463 749
US-A- 3 657 379

(73) Patentinhaber : Upat GmbH & Co
Freiburger Strasse 9 Postfach 1320
W-7830 Emmendingen (DE)

(72) Erfinder : KISTNER, Herbert
Am Mühlbach 10
W-7800 Freiburg (DE)
Erfinder : WEBER, Christian
Lammstra e 29
W-7830 Emmendingen (DE)

(74) Vertreter : Rackette, Karl, Dipl.-Phys. Dr.-Ing
Kaiser-Joseph-Strasse 179 Postfach 1310
W-7800 Freiburg (DE)

## Beschreibung

Die Erfindung betrifft zum einen den Reaktionssatz zur Herstellung eines Kunstharzkörpers, der für die Verankerung von Befestigungselementen in Befestigungsgrund durch Einsatz zerstörbarer Mehrkammerpatronen verwendet wird. Insbesondere richtet sich die Erfindung auf eine bestimmte Kombination von Komponenten des Reaktionssatzes zur Herstellung eines Kunstharzkörpers, eine zerstörbare Mehrkammerpatrone für die Verankerung von Befestigungselementen im Befestigungsgrund und ein Verankerungsverfahren, bei dem die Mehrkammerpatrone den speziellen Reaktionssatz enthält.

Seit langem ist es bekannt, zur sicheren Befestigung von Ankerstangen und dergleichen in gewachsenem Fels, Mauerwerk, Beton u.ä. aushärtende Kunstharze einzusetzen. Dabei werden die Ausgangskomponenten des Kunstharzes und der Kunstharzhärter getrennt voneinander an den Befestigungsort gebracht und dort durch das Eintreiben des Befestigungselementes gemischt. Die Bildung des gehärteten Kunstharzkörpers der das Befestigungselement mit dem Befestigungsgrund verklebt, wird damit erst in Gang gesetzt, wenn sich das Befestigungselement in seiner Endlage befindet.

Ihre mittlerweile weite Verbreitung verdankt diese Technik u.a. der Verwendung zerstörbarer Patronen, die ein bequemes Einbringen von Harzkomponenten und Kunstharzhärtern in Bohrlöcher für Ankerstangen gestatten und darüber hinaus Lagerung, Transport und Dosierung der reaktiven Ausgangsmaterialien des Kunstharzkörpers erleichtern.

Patronen, die Reaktionssätze für die Herstellung gehärteter Kunststoffkörper enthalten, wurden bereits in der DE-A- 12 05 038 im Zusammenhang mit einem Verfahren zum Befestigen von Ankerstangen ohne Spreizkopf beim Ankerausbau von Grubenräumen beschrieben. Es handelt sich dort um Glas- oder Bakelit-Patronen, in deren Füllung aus härtbarem Polyester- oder Epoxidharz und der gleichen oder grösseren Gewichtsmenge Quarzsand oder -mehl eine Kapsel eingebracht ist, die den Härter enthält. Im Zusammenhang mit Polyestern werden nach dieser Schrift organische Peroxide verwandt. Werden vorbeschleunigte Epoxidharze eingesetzt, so macht man von einem Aminhärter Gebrauch. Obwohl Patronen mit derartigen Reaktionssätzen seit mehreren Jahren in der Befestigungstechnik angewandt werden, weisen sie jedoch erhebliche Nachteile auf. Diese Nachteile bestehen in der langsamen Aushärtung von vorbeschleunigten Epoxidharzen mit Aminhärtern, so daß dann, wenn die schnelle Belastbarkeit des Befestigungselementes gefordert ist, Glaspatrone und Ankerstange auf Temperaturen über 150°C vorgewärmt werden müssen. Bei den peroxidgehärteten Polyesterharzen macht sich nachteilig bemerkbar, daß sie nicht hinreichend chemikalienbeständig, insbesondere nicht alkalibeständig sind. Insbesondere bei basischem Befestigungsgrund führt dies auf die Dauer zur Minderung der mechanischen Eigenschaften des Kunststoffkörpers. Darüber hinaus zeigen derartige gehärtete Polyesterharze auch eine relativ hohe Wasseraufnahme, die im Zusammenhang mit metallischen Befestigungselementen zu Korrosionsproblemen Anlaß geben kann. Um die Nachteile derartiger bekannter Materialien auszuschalten wurden in der EP-A-0 150 555 Zweikammerpatronen vorgeschlagen, bei denen sich ein feinkörniger natürlicher oder künstlicher mineralischer Füllstoff zusammen mit einem Vinylesterepoxyharz auf Acrylat- oder Methacrylatbasis in der inneren oder äußeren Kammer einer aus zwei ineinandergesteckten Glaszylindern aufgebauten Zweikammerpatrone befinden, während sich der Härter – ein organisches Peroxid – in der jeweils anderen Kammer befindet. Die Besonderheit der Patronen nach EP-A-0 150 555 liegt darin, daß der Harzkomponente ein reaktionsfähiges vinylisches Monomer zugemischt ist.

Die Kunstharzmassen nach EP-A-0 150 555 stellen insofern eine bedeutsame Weiterentwicklung gegenüber bislang bekannten Harzkompo- sitionen dar, als sie zum einen schneller aushärten als die bislang eingesetzten Epoxidharze und zum anderen den bislang eingesetzten Polyesterharzen bezüglich der Alkalibeständigkeit überlegen sind. Dennoch weisen auch die Kunststoffkörper, die nach der in EP-A-0 150 555 offenbarten Rezeptur nach Zertrümmern der Glaspatronen und Aushärten der Komponenten des Reaktionssatzes erhalten werden, erhebliche Nachteile auf :

Zum einen stellen derartige Kunstharzkörper keine ausreichend wirksame Diffusionsbarriere gegen reaktive Verbindungen, wie Salzsäure oder diffundierenden Wasserdampf dar, Diese relativ hohe Durchlässigkeit für niedermolekulare Substanzen bewirkt im Endeffekt eine Minderung der Korrosionsbeständigkeit des metallischen Befestigungselementes. Ein weiterer gravierender Nachteil der Verankerungen, die durch die Kunstharzkörper nach der Vorschrift der EP-A-0 150 555 erhalten werden, liegt in ihrem mechanischen Verhalten. Unter Dauerbelastung haben die so erhaltenen Kunstharzkörper die Neigung weich zu werden. Das dadurch bedingte Kriechverhalten der Harzmatrix führt dazu, daß unter Dauerbelastung durch die Schlupfgefahr des Befestigungselementes mit derartigem Kunstharzmaterial keine sichere Verankerung über längere Zeiträume gewährleistet werden kann. Damit ist dieser Harztyp für viele Anwendungsgebiete in der Bautechnik, in denen das Befestigungselement jahrzehntelanger Zugbeanspruchung sicher widerstehen muß, nicht geeignet.

Dieser Nachteil wird dadurch verstärkt, daß die einigermaßen befriedigende Aushärtgeschwindigkeit, die

2

dazu führt, daß das Befestigungselement nach relativ kurzer Zeit belastet werden kann, durch einen hohen Prozentsatz Härterkomponente in der Harzrezeptur bewirkt wird. Der hohe Prozentsatz an organischem Peroxid, wie er in EP-A-0 150 555 offenbart ist, bewirkt zwar einerseits ein schnelleres Ausreagieren der Kunstharzmischung, hat aber andererseits die unerwünschte Nebenwirkung, auch das schnelle Altern des Kunstharzkörpers zu fördern. Mit den chemischen Veränderungen, die im Laufe der Zeit die Adhäsionsfähigkeit des Harzes zum umgebenden Befestigungsgrund und zum Befestigungselement verringern und das innere Gefüge und damit die Festigkeit der Kunstharzmasse selbst beeinträchtigen (Verspröden, Brüchigwerden) ist ein weiterer Unsicherheitsfaktor gegeben, der den Langzeiteinsatz problematisch macht.

Weiter wirkt sich nachteilig aus, daß trotz vergleichsweise großer Aushärtgeschwindigkeit bei normalen Temperaturen (25°C) immer noch mit einer Aushärtzeit von mehreren Tagen gerechnet werden muß und selbst erhöhte Temperaturen (35°C) Aushärtzeiten im Stundenbereich erfordern, bis das Befestigungselement belastet werden kann. Für viele praktische Zwecke, in denen kostenintensive Wartezeiten dadurch verursacht werden, daß ein verankertes Befestigungselement noch nicht belastet werden kann, wirft die Anwendung der Lehre von EP-A-0 150 555 daher Probleme auf.

Ein weiterer negativer Aspekt des Stands der Technik ist die unbefriedigende Lagerbeständigkeit der Kunstharzkomponenten in den Patronen, insbesonders bei erhöhter Temperatur.

Aufgabe der vorliegenden Erfindung ist es, einen Reaktionssatz, insbesondere zum Einsatz in Mehrkammerpatronen, zur Herstellung eines Kunstharzkörpers bereitzustellen, der die Verankerung von Befestigungsmitteln im Befestigungsgrund bewirkt und sich dadurch auszeichnet, daß er nach geringer Aushärtzeit hochbelastbare Verankerungen bewirkt, die unter mechanischer Dauerbelastung unverändert stabil bleiben, hohe Säure- und Alkaliresistenz zeigen, gegenüber nieder- molekularen Verbindungen eine wirksame Diffusionsbarriere bildet und eine gleichermaßen hohe Adhäsionsfähigkeit gegenüber Metallen und natürlichenn und künstlichen mineralischen Materialien aufweisen und ohne Verminderung der praxiswesentlichen Eigenschaften im Bedarfsfall so ausgelegt werden kann, daß Lagerfähigkeit bei erhöhten Temperaturen gegeben ist.

Diese Aufgabe wird durch den Reaktionssatz zur Erzeugung von Kunstharzkörpern, insbesondere zum Einsatz in zerstörbaren Mehrkammerpatronen für die Verankerung von Befestigungselementen in Befestigungsgrund gelöst, wobei im Reaktionssatz

a) eine vorbeschleunigte Harzkomponente, die den Ester eines Epoxidharzes mit Acryl- und/oder mit Methacrylsäure und daneben ein oder mehrere ethylenisch ungesättigte(s) Monomere(s) sowie Beschleuniger, Polymerisationsinhibitoren sowie gegebenenfalls andere übliche Zusatzstoffe enthält,

b) eine Härterkomponente aus einem organischen Peroxid und

c) eine Füllstoffkomponente vorhanden sind, der dadurch gekennzeichnet ist, daß der Reaktionssatz unter Verwendung von 18 bis 25 Gew.-T1. der vorbeschleunigten Harzkomponente 0,4 bis 1,2 Gew.-T1. der Härterkomponente und 40 bis 55 Gew.-T1. der Füllstoffkomponente aufgebaut ist und die vorbeschleunigte Harzkomponente als Bestandteile

A) 3 bis 60 Gew.-T1. des Vinylesterepoxyharzes

B) 28 bis 45 Gew.-T1. eines oder mehrerer ethylenisch ungesättigter monomerer Verbindungen und

C) 63 bis 3 Gew.-T1. eines ungesättigten Polyesters

D) 10 bis 0,1 Gew.-T1. Epoxidharz enthält.

Die Erfindung schließt auch eine zerstörbare Mehrkammerpatrone für die in-situ Herstellung von Kunstharzkörpern zur Befestigung von Verankerungselementen in Bohrlöchern ein, wobei die Patrone den erfindungsgemäßen Reaktionssatz enthält und wobei sich der organische Peroxidhärter und die vorbeschleunigte Harzkomponente getrennt voneinander in verschiedenen Kammern befinden.

Die erfindungsgemäße zerstörbare Mehrkammerpatrone findet Verwendung in Verfahren zur Verankerung eines Befestigungselementes im Befestigungsgrund durch Einbringen einer zerstörbaren Mehrkammerpatrone, die die Komponenten eines aushärtbaren Klebstoffes enthält, in ein Bohrloch im Befestigungsgrund eingebracht wird, wobei durch Eintreiben des Befestigungselementes die Patrone zerstört und die Kunstharzkomponenten gemischt werden, worauf das Kunstharz aushärtet.

In den Unteransprüchen sind bevorzugte Ausführungsformen der Erfindung beschrieben. Es wurde überraschenderweise gefunden, daß die Kombination der Komponenten (A), (B), (C) und ggfs. (D) die Eigenschaftenkombination zur Lösung der Aufgabe ergibt. Dabei führt der Zusatz des Epoxidharzes (D) – bevorzugt werden Epoxidharze vom Typ Bisphenol A eingesetzt – zur erheblich erhöhten Lagerfähigkeit der Kunstharzkomponente des Reaktionssatzes bei erhöhter Temperatur (Dauerlagerfähigkeit bei Temperaturen um 50°C).

Völlig unerwartet wird trotz der sehr unterschiedlichen Reaktivität der Bestandteile (A), (C) der vorbeschleunigten Harzkomponente ein homogenes, nicht trübes Produkt erhalten. Ebenfalls überraschend ist es, daß die Bildung von Gasblasen während des Aushärtens der Kunstharzmasse aus dem erfindungsgemäßen Reaktionssatz unterbleibt. Im Endeffekt gewährleistet dies einen einheitlichen Kunststoffkörper. Bereits durch das Fehlen von Inhomogenitäten im Kunstharz selbst wird eine Quelle des anglichen Versagens der Klebverankerung beseitigt,

Ohne daß daraus eine Theorie abgeleitet werden soll, wird darauf hingewiesen, daß beim neuartigen Reaktionsprodukt aus dem erfindungsgemäßen Reaktionssatz mit (A), (B), (C) und ggfs. (D) in der Harzkomponente möglicherweise ein höherer Vernetzungsgrad des Reaktionsproduktes resultiert. Die erheblich höhere Chemikalienbeständigkeit gegenüber Harzen des Stands der Technik kann durch eine dadurch bedingte bessere Abschirmung der Estergruppen bedingt sein.

Eine derartige Struktur mag auch eine plausible Erklärung für den erheblich besseren Widerstand der Kunstharzkörper aus dem erfindungsgemäßen Reaktionssatz gegen diffundierende Medien bieten. Besonders muß hervorgehoben werden, daß beim erfindungsgemäßen Reaktionssatz trotz der vergleichsweise sehr geringen Menge an Peroxidhärter eine hohe Aushärtgeschwindigkeit gegeben ist. Bevorzugt in Bezug auf die Ausgewogenheit ihrer Reaktivität, ihrer Mischbarkeit unter den Eindrehbedingungen der zu befestigenden Ankerstange und der zu erzielenden Dauerbelastbarkeit des resultierenden Harzkörpers sind Reaktionssätze, die im Vinylesterepoxyharz ein Epichlorhydrinepoxidharz vom Typ Bisphenol A enthalten. Bezüglich der Handhabbarkeit und der Reaktivität ist es bevorzugt, daß generell das Vinylesterepoxyharz (A) eine mittlere Molmasse von 450 bis 1200 Dalton hat, eine Esterzahl von 80 bis 150 mg KOH/g Harz aufweist und, wenn es in Form einer Lösung von 55 bis 70 Gew.-% (A) im verwendeten Monomer vorliegt, eine Viskosität von 400 bis 1000 mPas bei 23°C hat.

Als ethylenisch ungesättigtes Monomer (B) ist aufgrund seiner befriedigenden Reaktivität und der Kostenvorteile, die mit der einfachen Zugänglichkeit verbunden sind, Styrol und/oder Methylmethacrylat besonders geeignet.

Bzgl. ihrer chemischen Natur sind als Polyesterharze (C) insbesondere ungesättigte Polyester auf der Basis von o-Phthalsäure und/oder m-Phthalsäure oder Isophthalsäure mit Ethylenglykol und/oder Propylenglykol und/oder Tricyclodecandimethanol und/oder Neopentyglykol geeignet. Bzgl. der Reaktivität und der Handhabbarkeit (Fließverhalten Mischbarkeit) erweist es sich als bevorzugt, Polyesterharze (C) einzusetzen, deren Esterzahl im Bereich von 180 bis 320 mg KOH/g Harz liegt und die, wenn sie in Form einer Lösung von 50 bis 70% (C) verwendeten Monomer vorliegen, eine Viskosität von 800 bis 6000 mPa s bei 23° haben. Als Epoxidharzkomponente (D) sind besonders solche geeignet, deren Epoxidäquivalentgewicht im Bereich von 160 bis 200 g/Äquivalent liegt und die eine Viskosität von 2500 bis 4000 mPas bei 23°C haben.

Der erfindungsgemäße Reaktionssatz wird vorzugsweise in einer Mehrkammerpatrone verwendet, die den Härter und die vorbeschleunigte Harzkomponente in verschiedenen Kammern enthält. Der Füllstoff kann sich dabei mit dem vorbeschleunigten Kunstharz in einer Kammer befinden. Diese Anordnung bietet sich an, wenn die Patrone – wie im Stand der Technik üblich – als Zweikammerpatrone ausgebildet ist.

Überraschenderweise lassen sich in Bezug auf Festigkeit und Dauerhaftigkeit der Verankerung des Befestigungselements besonders gute Ergebnisse erzielen, wenn bei der Ausbildung der Mehrkammerpatrone aus Glas ein Gewichtsverhältnis von 20 bis 35 Gew.-Teilen Patronenglas bei 18 bis 25 Gew.-Teilen der vorbeschleunigten Harzkomponente des erfindungsgemäßen Reaktionssatzes, 0,4 bis 1,2 Gew.-Teile Peroxidhärter und 40 bis 55 Gew.-Teile der Füllstoffko ponente eingehalten wird.

Die Füllstoffkomponente besteht da vorzugsweise aus feinkörnigem Quarz, Magnesiaklinker, Marmormehl o.ä. Gemäß der Erfindung wird zu Verankerung eines Befestigungselements im Befestigungsgrund am besten so verfahren, daß in an sich bekannter Weise eine zerstörbare Mehrkammerpatrone, die den erfindungsgemäßen Reaktionssatz enthält, in ein Bohrloch im Befestigungsgrund eingebracht wird. Darauf wird durch Eintreiben des Befestigungelements die Patrone zerstört, der vorher von der vorbeschleunigten Kunstharzkomponente getrennte Härter wird mit dem auszuhärtenden Material gemischt und so die Aushärtereaktion in-situ in Gang gesetzt.

Die folgenden Beispiele zeigen die Ausführung der vorliegenden Erfindung und verdeutlichen die gegenüber dem Stand der Technik überlegenen Eigenschaften der erfindungsgemäßen Kombination.

Vergleichsbeispiel :

Zusammensetzung mit Vinylesterepoxyharz

| Vinylesterepoxyharz | 60,00 g |
|---|---|
| Monostyrol | 39,85 g |
| Dimethyl-p-toluidin | 0,15 g |
| | 100,00 g |

Esterzahl (EZ) = 60 mg KOH/g Harz Viskosität bei 23°C = 600 mPa s Langzeitbeständigkeit, gelagert bei 50°C = 2 bis 3 Monate. Diese Langzeitbeständigkeit ist unzureichend.

Beispiel 1 :

| Vinylesterepoxyharz | 47,85 g |
|---|---|
| ungesättigter Neopentylglycol-m-phthalsäurepolyester | 12,00 g |
| Dimethyl-p-toluidin | 0,15 g |
| Monostyrol | 40,00 g |
| | 100,00 g |

EZ = 107 mg KOH/g Harz Viskosität bei 23°C = 680 mPa s Langzeitbeständigkeit, gelagert in 50°C = mind. 6 Monate

Beispiel 2 :

| Vinylesterepoxyharz | 31,00 g |
|---|---|
| ungesättigter Tricyclodecandimethanol-o,m-phthalsäurepolyester | 30,85 g |
| Dimethyl-p-toluidin | 0,15 g |
| Monostyrol | 38,00 g |
| | 100,00 g |

EZ = 150 Viskosität bei 23°C = 1500 mPa s Langzeitbeständigkeit, gelagert in 50°C = mind. 6 Monate

Beispiel 3 :

| Vinylesterepoxyharz | 46,40 g |
|---|---|
| ungesättigter Tricyclodecandimethanolpolyester | 11,60 g |
| Dimethyl-p-toluidin | 0,15 g |
| Monostyrol | 41,85 g |
| | 100,00 g |

EZ = 93 ; Viskosität bei 23°C = 834 mPa s Langzeitbeständigkeit, gelagert in 50°C = mind. 6 Monate

Beispiel 4 :

| | |
|---|---|
| Vinylesterepoxyharz | 40,00 g |
| ungesättigter Tricyclodecandimethanolpolyester | 20,00 g |
| Dimethyl-p-toluidin | 0,15 g |
| Monostyrol | 17,85 g |
| Methylmethacrylat | 12,00 g |
| Epoxidharz mit einem Epoxidäquivalent 200 | 10,00 g |
| | 100,00 g |

Viskosität bei 23°C = 1250 mPas Langzeitbeständigkeit, gelagert in 50°C = mind. 10 Monate.

Beispiel 5 :

| | |
|---|---|
| Vinylesterepoxyharz vorbeschleunigt | 3,00 g |
| ungesättigter Tricyclodecandimethanolpolyester | 59,00 g |
| Monostyrol | 38,00 g |
| | 100,00 g |

EZ = 220 KOH/g Harz Viskosität bei 23°C = 2800 mPa s Langzeitbeständigkeit, gelagert in 50°C = mind. 6 Monate

Beispiel 6 :

| | |
|---|---|
| Vinylesterepoxyharz vorbeschleunigt | 60,00 g |
| ungesättigter Isophthalsäure-neopentylglycolpolyester | 8,00 g |
| Monostyrol | 31,00 g |
| Epoxidharz mit einem Epoxidäquivalent 200 | 1,00 g |
| | 100,00 g |

EZ = 84 KOH/g Harz Viskosität bei 23°C = 550 mPa s Langzeitbeständigkeit, gelagert in 50°C = mind. 10 Monate

Beispiel 7 :

| | |
|---|---|
| Vinylesterepoxyharz vorbeschleunigt | 6,00 g |
| ungesättigte Tricyclodecandimethanolpolyester | 63,00 g |
| Monostyrol | 28,00 g |
| Epoxidharz mit einem Epoxidäquivalent 180 | 3,00 g |
| | 100,00 g |

EZ = 152 KOH/g Harz, Viskosität bei 23°C = 4200 mPa s Langzeitbeständigkeit, gelagert in 50°C = mind. 10 Monate

6

Beispiel 8 :

| | |
|---|---|
| Vinylesterepoxyharz vorbeschleunigt | 14,60 g |
| ungesättigter Tricyclodecandimethanolpolyester | 40,00 g |
| Monostyrol | 45,00 g |
| Epoxidharz mit einem Epoxidäquivalent 180 | 0,40 g |
| | 100,00 g |

EZ = 186 KOH/g Harz ; Viskosität bei 23°C = 2000 mPa s Langzeitbeständigkeit, gelagert in 50°C = mind. 10 Monate

Beispiel 9 :

| | |
|---|---|
| Vinylesterepoxyharz vorbeschleunigt | 49,10 g |
| ungesättigter Tricyclodecandimethanolpolyester | 12,30 g |
| Monostyrol | 38,50 g |
| Epoxidharz mit einem Epoxidäquivalent 200 | 0,10 g |
| | 100,00 g |

EZ = 110 KOH/g Harz ; Viskosität bei 23°C = 750 mPa s Langzeitbeständigkeit, gelagert in 50°C = mind. 10 Monate

Beispiel 10 :   Patrone der Größe M 12 (metrisches Gewinde)

| | |
|---|---|
| Aminvorbeschleunigte Harzkomponente nach Beispiel 1 | 4,30 g |
| Quarz (Körngröße 1,2-1,8 mm) | 8,20 g |
| Dibenzoylperoxid (20 % in Gips) | 0,54 g |
| Patronenglas (Außen- und Innenpatrone) | 5,40 g |
| | 18,44 g |

Ankerstange M 12 x 160, Gewindestangenqualität 12.9 Aushärtezeit : 0,5 h Beton : B 50 Istfestigkeit : 54,2 N/mm² mittlerer Auszugswert X : KN - 101,7 Verbundfestigkeit : N/mm² - 20,7 Versagen : Ankerstangenbruch

Beispiel 11 :   Patrone der Größe M 12 (metrisches Gewinde)

| | |
|---|---|
| Aminvorbeschleunigte Harzkomponente nach Beispiel 2 | 3,60 g |
| Quarz (Körngröße 0,5-1,8 mm) | 8,00 g |
| Dibenzoylperoxid (50 % in Phthalatweichmacher) | 0,24 g |
| Patronenglas (Außen- und Innenpatrone) | 5,45 g |
| | 17,29 g |

Ankerstange M 12 x 160, 12.9 Aushärtezeit : 0,5 h Beton : B 50 Istfestigkeit : 54,2 N/mm² mittlerer Auszugswert X : KN : 96,3 Verbundfestigkeit : N/mm² - 19,6 Versagen : Verbundversagen - Ankerstangenbruch

7

Beispiel 12 :   Patrone der Größe M 12 (metrisches Gewinde)

```
Aminvorbeschleunigte Harzkomponente nach Beispiel 3      4,00 g
Quarz (Körngröße 1,2-1,8 mm)                             8,80 g
Dibenzoylperoxid (50 % in Phthalatweichmacher)          0,26 g
Patronenglas (Außen- und Innenpatrone)                  5,37 g
                                                        ─────────
                                                        18,43 g
```

Ankerstange M 12 × 160, 12.9 Aushärtezeit : 0,5 h Beton : B 50 Istfestigkeit : 54,2 N/mm² mittlerer Auszugswert X : KN - 99,9 Verbundfestigkeit : N/mm² - 20,4 Versagen : Verbundversagen durch Ankerstangenbruch

## Ansprüche

1. Reaktionssatz zur Erzeugung von Kunstharzkörpern, insbesondere zum Einsatz in zerstörbaren Mehrkammerpatronen für die Verankerung von Befestigungselementen im Befestigungsgrund, wobei im Reaktionssatz

a) eine vorbeschleunigte Harzkomponente, die den Ester eines Epoxidharzes mit Acryl- und/oder mit Methacrylsäure und daneben ein oder mehrere ethylenisch ungesättigte(s) Monomere(s) sowie Beschleuniger, Polymerisationsinhibitoren sowie gegebenenfalls andere übliche Zusatzstoffe enthält,

b) eine Härterkomponente aus einem organischen Peroxid und

c) eine Füllstoffkomponente vorhanden sind, **dadurch gekennzeichnet**, daß der Reaktionssatz unter Verwendung von

18 - 25 Gew.Tl. der vorbeschleunigten Harzkomponente

0,4 - 1,2 Gew.Tl. der Härterkomponente und

40 - 55 Gew.Tl. der Füllstoffkomponente aufgebaut ist und die vorbeschleunigte Harzkomponente als Bestandteile

A) 3 - 60 Gew.Tl. des Vinylesterepoxidharzes

B) 28 - 45 Gew.Tl. eines oder mehrerer ethylenisch ungesättigter monomerer Verbindungen und

C) 63 - 3 Gew.Tl. eines ungesättigten Polyesters

D) 10 - 0,1 Gew.Tl. Epoxidharz enthält.

2. Reaktionssatz nach Anspruch 1, **dadurch gekennzeichnet**, daß das Vinylesterepoxyharz (A) auf Basis eines Epichlorhydrinepoxidharzes mit Acryl- und/oder Methacrylsäure aufgebaut ist, wobei bevorzugt ein Epichlorhydrinepoxidharz vom Typ Bisphenol A verwendet wird.

3. Reaktionssatz nach Ansprüchen 1 und 2, **dadurch gekennzeichnet**, daß das ethylenisch ungesättigte Monomer (B) Styrol und/oder Methylmethacrylat ist.

4. Reaktionssatz nach Ansprüchen 1 bis 3, **dadurch gekennzeichnet**, daß das ungesättigte Polyesterharz (C) auf der Basis von o-Phthalsäure und/ oder m-Phthalsäure mit Ethylenglykol und/oder Propylenglykol und-/oder Tricyclodecandimethanol und/oder Neopentylglykol aufgebaut ist.

5. Reaktionssatz nach Ansprüchen 1 bis 4, **dadurch gekennzeichnet**, daß das Epoxidharz (D) auf Basis von Epichlorhydrin und Bisphenol A aufgebaut ist.

6. Reaktionssatz nach Ansprüchen 1 bis 5, **dadurch gekennzeichnet**, daß das Vinylesterepoxyharz (A) eine mittlere Molmasse von 450 bis 1200 Dalton hat.

7. Reaktionssatz nach Ansprüchen 1 bis 6, **dadurch gekennzeichnet**, daß das Vinylesterepoxyharz (A) eine Esterzahl von 80 bis 150 mg KOH/g Harz aufweist.

8. Reaktionssatz nach Ansprüchen 1 bis 7, **dadurch gekennzeichnet**, daß das Vinylesterepoxyharz (A) in Form einer Lösung von 55 bis 70 Gew.% (A) im verwendeten Monomer bezogen auf das Gesamtgewicht der Lösung eine Viskosität von 400 bis 1000 mPa s bei 23°C hat.

9. Reaktionssatz nach Ansprüchen 1 bis 8, **dadurch gekennzeichnet**, daß das ungesättigte Polyesterharz (C) eine Esterzahl von 180 bis 320 mg KOH/g Harz aufweist.

10. Reaktionssatz nach Ansprüchen 1 bis 9, **dadurch gekennzeichnet**, daß das ungesättigte Polyesterharz (C) in Form einer Lösung von 50 bis 70 Gew.% (C) im verwendeten Monomer, bezogen auf das Gesamtgewicht der Lösung, eine Viskosität von 800 bis 6000 mPa s bei 23°C hat.

11. Reaktionssatz nach Ansprüchen 1 bis 10 **dadurch gekennzeichnet**, daß das Epoxidharz (D) ein Epoxidäquivalentgewicht von 160 bis 200 g/Äquivalent aufweist.

12. Reaktionssatz nach Ansprüchen 1 bis 11, **dadurch gekennzeichnet**, daß das Epoxidharz (D) bei 23°C eine Viskosität von 2500 bis 4000 mPa s aufweist.

13. Zerstörbare Mehrkammerpatrone für die in-situ-Herstellung von Kunstharzkörpern zur Befestigung von Verankerungselementen in Bohrlöchern, **dadurch gekennzeichnet**, daß sie den Reaktionssatz nach Ansprüchen 1 bis 12 enthält, wobei sich der organische Peroxidhärter und die vorbeschleunigte Harzkomponente getrennt voneinander in verschiedenen Kammern befinden.

14. Zerstörbare Mehrkammerpatrone nach Anspruch 13, **dadurch gekennzeichnet**, daß sie als Zweikammerpatrone ausgebildet ist.

15. Zerstörbare Mehrkammerpatrone nach Ansprüchen 13 und 14, **dadurch gekennzeichnet**, daß sie aus Glas besteht.

16. Zerstörbare (Mehrkammerpatrone nach Anspruch 15, **dadurch gekennzeichnet**, daß das Gewichtsverhältnis von

20 bis 35 Gew.T1. Patronenglas

18 bis 25 Gew.T1. der vorbeschleunigten Harzkomponente

0,4 bis 1,2 Gew.T1. Peroxidhärter und

40 bis 55 Gew.T1. der Füllstoffkomponente eingehalten ist.

17. Zerstörbare Mehrkammerpatrone nach Anspruch 16, **dadurch gekennzeichnet**, daß die Füllstoffkomponente aus feinkörnigem Quarz, Magnesiaklinker oder Marmormehl o.ä. besteht.

18. Verfahren zur Verankerung eines Befestigungselementes im Befestigungsgrund durch Einbringen einer zerstörbaren Mehrkammerpatrone, die die Komponenten eines aushärtbaren Klebstoffes enthält, in ein Bohrloch im Befestigungsgrund eingebracht wird, wobei durch Eintreiben des Befestigungselementes die Patrone zerstört und die Kunstharzkomponenten gemischt werden, worauf das Kunstharz aushärtet, **dadurch gekennzeichnet**, daß eine zerstörbare Mehrkammerpatrone nach Ansprüchen 13 bis 16 eingesetzt wird.

## Claims

1. A reactive composition for the production of synthetic resin bodies, in particular for use in destructible multi-chamber cartridges for anchoring of fixing elements in a fixing base, wherein the reactive composition includes

a) a pre-accelerated resin component which contains the ester of an epoxy resin with acrylic and/or methacrylic acid and in addition one or more ethylenically unsaturated monomer or. monomers as well as accelerators, polymerisation inhibitors and optionally other conventional additives,

b) a hardener component comprising an organic peroxide, and

c) a filler component, characterised in that the reactive composition is constituted using

18 to 25 parts by weight of the pre-accelerated resin component,

0.4 to 1.2 parts by weight of the hardener component, and

40 to 55 parts by weight of the filler component, and the pre-accelerated resin component contains as constituents

A) 3 to 60 parts by weight of vinyl ester epoxy resin,

B) 28 to 45 parts by weight of one or more ethylenically unsaturated monomeric compounds,

C) 63 to 3 parts by weight of an unsaturated polyester, and

D) 10 to 0.1 parts by weight of epoxy resin.

2. A reactive composition according to claim 1 characterised in that the vinyl ester epoxy resin (A) is constituted on the basis of an epichlorhydrinepoxy resin with acrylic and/or methacrylic acid, wherein an epichlorhydrinepoxy resin of type bisphenol A is preferably used.

3. A reactive composition according to claims 1 and 2 characterised in that the ethylenically unsaturated monomer (B) is styrene and/or methylmethacrylate.

4. A reactive composition according to claim 1 to 3 characterised in that the unsaturated polyester resin (C) is constituted on the basis of o-phthalic acid and/or m-phthalic acid with ethylene glycol and/or propylene glycol and/or tricyclodecanedimethanol and/or neopentylglycol.

5. A reactive composition according to claims 1 to 4 characterised in that the epoxy resin (D) is constituted on the basis of epichlorhydrine and bisphenol A.

6. A reactive composition according to claims 1 to 5 characterised in that the vinyl ester epoxy resin (A) has a mean molecular mass of 450 to 1200 Daltons.

7. A reactive composition according to claims 1 to 6 characterised in that the vinyl ester epoxy resin (A) has an ester value of 80 to 150 mg KOH/g of resin.

8. A reactive composition according to claims 1 to 7 characterised in that the vinyl ester epoxy resin (A) in the form of a solution of 55 to 70% by weight (A) in the monomer used in relation to the total weight of the solution has a viscosity of 400 to 1000 mPa s at 23°C.

9. A reactive composition according to claims 1 to 8 characterised in that the unsaturated polyester resin (C) has an ester value of 180 to 320 mg KOH/g of resin.

10. A reactive composition according to claims 1 to 9 characterised in that the unsaturated polyester resin (C) in the form of a solution of 50 to 70% by weight (C) in the monomer used, in relation to the total weight of the solution, has a viscosity of 800 to 6000 mPa s at 23°C.

11. A reactive composition according to claims 1 to 10 characterised in that the epoxy resin (D) has an epoxy equivalent weight of 160 to 200 g/equivalent.

12. A reactive composition according to claims 1 to 11 characterised in that the epoxy resin (D) has at 23°C a viscosity of 2500 to 4000 mPa s.

13. A destructible multi-chamber cartridge for the in-situ production of synthetic resin bodies for the fixing of anchoring elements in bore holes, characterised in that it contains the reactive composition according to claims 1 to 12, wherein the organic peroxide hardener and the pre-accelerated resin component are disposed separately from each other in different chambers.

14. A destructible multi-chamber cartridge according to claim 13 characterised in that it is in the form of a two-chamber cartridge.

15. A destructible multi-chamber cartridge according to claims 13 and 14 characterised in that it comprises glass.

16. A destructible multi-chamber cartridge according to claim 15 characterised in that the weight ratio of
20 to 35 parts by weight of cartridge glass
18 to 25 parts by weight of the pre-accelerated resin component
0. 4 to 1.2 parts by weight of peroxide hardener and
40 to 55 parts by weight of the filler component is observed.

17. A destructible multi-chamber cartridge according to claim 16 characterised in that the filler component comprises fine-grain quartz, magnesia klinker or marble dust or the like.

18. A method of anchoring a fixing element in a fixing base by introducing a destructible multi-chamber cartridge which contains the components of a hardenable adhesive and is introduced into a bore hole in the fixing base, wherein by the fixing element being driven in the cartridge is destroyed and the synthetic resin components are mixed, whereupon the synthetic resin hardens, characterised in that a destructible multi-chamber cartridge according to claim 13 to 16 is used.

## Revendications

1. Formule de réaction, à utiliser notamment dans des cartouches multicompartimentées destructibles pour obtenir des corps en matière synthétique en vue de l'ancrage d'éléments de fixation dans la base de fixation, la formule de réaction comprenant :
   a) une composition de polymères prédispersés, qui contient l'ester d'une résine époxy avec de l'acide acrylique et/ou méthacrylique, ainsi qu'un ou plusieurs monomères éthyléniques insaturés et que des agents dispersants et des inhibiteurs de polymérisation, et éventuellement que d'autres additifs usuels,
   b) un durcisseur à base de peroxyde organique, et
   c) des mélanges de charges, caractérisée en ce que la formule de réaction est constituée en utilisant
   18 à 25 parties en poids de polymères prédispersés
   0,4 à 1,2 parties en poids de durcisseurs et
   40 à 55 parties en poids de mélanges de charges, le mélange de polymères prédispersés étant composé de
   A) 3 à 60 parties en poids de résine époxy estervinylique
   B) 28 à 45 parties en poids d'un ou plusieurs monomères éthyléniques insaturés et
   C) 63 à 3 parties en poids d'un polyester insaturé
   D) 10 à 0,1 parties en poids de résine époxy.

2. Formule de réaction selon la revendication 1, caractérisée en ce que la résine époxy estervinylique (A) est à base d'une résine époxyépichlorydrine avec de l'acide acrylique et/ou méthacrylique, en utilisant de préférence une résine époxy-épichlorhydrine du type bisphénol A.

3. Formule de réaction selon la revendication 1 ou 2, caractérisée en ce que le monomère éthylénique insaturé (B) est du styrène et/ou du méthacrylate de méthyle.

4. Formule de réaction selon les revendications 1 à 3, caractérisée en ce que la résine polyester insaturée (C) est à base d'acide o-phtalique et/ou d'acide m phtalique, avec de l'éthylène glycol et/ou du propylène glycol et/ou du diméthanol tricyclodécane et/ou du néopentyl glycol.

5. Formule de réaction selon les revendications 1 à 4, caractérisée en ce que la résine époxy (D) est à base d'épichlorhydrine et de bisphénol A.

6. Formule de réaction selon les revendications 1 à 5, caractérisée en ce que la résine époxy ester-vinylique (A) a une masse moléculaire moyenne de 450 à 1200 dalton.

7. Formule de réaction selon les revendications 1 à 6, caractérisée en ce que la résine époxyester-vinylique (A) présente un indice d'ester de 80 à 150 mg KOH/g de résine.

8. Formule de réaction selon les revendications 1 à 7, caractérisée en ce que la résine époxy ester-vinylique (A), sous la forme d'une solution de 55 à 70% en poids de (A) dans le monomère utilisé, par rapport au poids total de la solution, a une viscosité de 400 à 1000 mPa s à 23°C.

9. Formule de réaction selon les revendications 1 à 8, caractérisée en ce que la résine polyester insaturée (C) présente un indice d'ester de 180 à 320 mg KOH/g de résine.

10. Formule de réaction selon les revendications 1 à 9, caractérisée en ce que la résine polyester insaturée (C), sous la forme d'une solution de 50 à 70% en poids de (C) dans le monomère utilisé, par rapport au poids total de la solution, a une viscosité de 800 à 6000 mPa s à 23°C.

11. Formule de réaction selon les revendications 1 à 10, caractérisée en ce que la résine époxy (D) présente un poids d'équivalent époxy de 160 à 200 g/équivalent.

12. Formule de réaction selon les revendications 1 à 11, caractérisée en ce que la résine époxy (D) présente une viscosité de 2500 à 4000 mPa s, à 23°C.

13. Cartouche multicompartimentée destructible pour la fabrication "in-situ" de corps en matière synthétique destinés à la fixation d'éléments d'ancrage dans des trous forés, caractérisée en ce qu'elle contient la formule de réaction selon les revendications 1 à 12, le durcisseur peroxyde organique et les composés de polymères prédispersés étant contenus séparément dans des compartiments différents.

14. Cartouche multicompartimentée destructible selon la revendication 13, caractérisée en ce qu'elle est composée de deux compartiments.

15. Cartouche multicompartimentée destructible selon les revendications 13 et 14, caractérisée en ce qu'elle est réalisée en verre.

16. Cartouche multicompartimentée destructible selon la revendication 15, caractérisée en ce que les proportions suivantes sont respectées

20 à 35 parties en poids de verre de cartouche

18 à 25 parties en poids de composés de polymères prédispersés

0,4 à 1,2 parties en poids de durcisseur peroxyde et

40 à 55 parties en poids de mélanges de charges.

17. Cartouche multicompartimentée destructible selon la revendication 16, caractérisée en ce que les charges sont composées, entr'autres, de quartz fin, de poudre de magnésie ou de poudre de marbre.

18. Procédé pour l'ancrage d'un élément de fixation dans la base de fixation, par l'introduction d'une cartouche multicompartimentée destructible qui contient les composants d'un adhésif durcissable et qui est introduite dans un trou foré dans la base de fixation, la cartouche étant détruite par l'enfoncement de l'élément de fixation, et les composés de polymères étant mélangés, à la suite de quoi la matière synthétique durcit, caractérisé en ce qu'on utilise une cartouche multicompartimentée destructible selon les revendications 13 à 16.